# FASCICULE DE BREVET EUROPEEN

(11) **EP 2 887 571 B1**
(45) Date de publication et mention de la délivrance du brevet: **11.07.2018**
(21) Numéro de dépôt: 14197821.3
(22) Date de dépôt: 12.12.2014
(51) Int. Cl.: H04K 1/00, H04L 29/06, H04W 12/02

(54) **Boîtier de communication sécurisée, ensemble de communication sécurisée et procédé de communication sécurisée associé**
Gesicherte Kommunikationsbox, gesicherte Kommunikationseinheit und entsprechendes gesicherte Kommunikationsverfahren
Secure communication housing, secure communication assembly and associated method for secure communication

(30) Priorité: 17.12.2013 FR 1302972
(43) Date de publication de la demande: 24.06.2015
(73) Titulaire: Etat français représenté par le Délégué Général pour l'Armement, 75509 Paris Cedex 15 (FR)
(72) Inventeur: Colas, Jean-Baptiste, 83500 La Seyne Sur Mer (FR)
(74) Mandataire: Cabinet Chaillot

(56) Documents cités:
- EP-A1- 2 106 169
- US-A1- 2005 195 667

## Description

La présente invention concerne le domaine des télécommunications, et porte en particulier sur un boîtier d'interface de communication sécurisée, un ensemble de communication sécurisée et un procédé de communication sécurisée associé. Le chiffrement/déchiffrement de données connaît un développement important en raison des croissances simultanées du trafic de données et des débits de données proposés. Il est en effet important de protéger les données et donc de sécuriser les communications au moyen d'opérations de chiffrement/déchiffrement afin que les données ne puissent ni être lues ni être utilisées si elles sont interceptées.

Ceci est particulièrement vrai pour les réseaux de communication sans fil plus difficiles à sécuriser et dans lesquels il est donc plus facile d'intercepter les données échangées. Dans le domaine militaire, où les données échangées sont encore plus sensibles, la protection des communications par le chiffrement des données est encore plus critique.

Il existe de nombreux appareils permettant une communication sécurisée par chiffrement de données. De manière générale, les appareils existants proposent une communication chiffrée entre deux appareils identiques possédant le même protocole de chiffrement/déchiffrement de données utilisant un système clé publique/clé privée, facultativement en combinaison avec des certificats identifiant les utilisateurs.

Par exemple, le dispositif Nabishi NHT-78A de la société Nabishi Systems est une radio portative qui permet des échanges sécurisés entre deux utilisateurs ou plus équipés du même dispositif NHT-78A.

Un inconvénient de ce dispositif est qu'il ne permet pas d'évolution en fonction des normes de télécommunications.

Un autre inconvénient est qu'il est très limité en termes d'interface utilisateur, puisqu'il permet principalement la transmission chiffrée de données vocales.

De même, la demande de brevet américain US2005/0195667A1 décrit un dispositif sur lequel on peut injecter des données vocales ou des données numériques et possédant une interface utilisateur, qui peut être utilisé pour communiquer avec au moins un autre dispositif identique sur tout type de réseau.

L'inconvénient de ce type de dispositif est qu'il n'est pas évolutif, et que les moyens d'interface utilisateur sont limités à ceux présents sur le dispositif.

Par ailleurs, on connait le brevet EP2106169 qui décrit un boîtier d'interface de communication comportant une interface de gestion, une alimentation électrique, un module de communication courte distance avec un dispositif portable, commandé par l'interface de gestion, un module de communication longue distance commandé par l'interface de gestion et un module de chiffrement/déchiffrement de la communication longue distance, commandé par l'interface de gestion. Ce dispositif comporte plusieurs inconvénient dont :
- L'impossibilité de pouvoir relayer de proche en proche les données des autres boîtiers d'interface de communication sécurisée identiques
- la nécessité d'avoir, au niveau du dispositif portable, la présence d'une porte OU absente dans la plupart des dispositifs portables grands public,
- la nécessité, pour le transfert des clés de chiffrement, d'obtenir soit une connexion physique entre le terminal principal et le dispositif portable (par exemple, un *smartphone*) soit un transfert physique d'unité mémoire.

Il existe donc un problème selon lequel l'évolution rapide des différents moyens d'interface utilisateur n'est pas prise en compte dans ces dispositifs, une nouvelle interface utilisateur nécessitant de concevoir un nouveau dispositif.

La présente invention vise à résoudre les inconvénients de l'état antérieur de la technique, en proposant un boîtier apte à s'apparier par communication chiffrée courte distance avec n'importe quel dispositif, en particulier un téléphone portable, un téléphone intelligent (aussi désigné plus couramment smartphone), une tablette portable, un ordinateur, équipé d'un moyen de communication sécurisée courte distance, et apte à communiquer de manière chiffrée sur des communications longue distance avec un boîtier identique, lui-même apparié à n'importe quel dispositif équipé d'un moyen de communication sécurisée courte distance.

La présente invention, en déportant la communication longue distance sur un boîtier séparé, permet d'échanger de manière directe (ad-hoc) des données par ondes radio sécurisées en couche basse matérielle entre deux systèmes de communication mobile, sans que soit nécessaire de prendre en compte le modèle du système de communication mobile.

La présente invention permet ainsi un transfert de données sécurisé en couche basse matérielle au sein d'un parc hétérogène de systèmes de communication mobile, et permet ainsi la gestion de l'obsolescence programmée des interfaces de type téléphone intelligent.

La présente invention autorise, entre deux boîtiers d'interface de communication sécurisée ou plus selon l'invention, une connexion de communication sécurisée sur un réseau d'opérateur, ou une connexion de communication sécurisée directe sans réseau centralisé (connexion de dispositif à dispositif ou D2D) entre les dispositifs appariés aux boîtiers d'interface de communication sécurisée. Le mode de communication retenu entre deux boîtiers d'interface de communication sécurisée est le tunnel chiffré en point à point et point à multipoints. Chaque boîtier d'interface de communication sécurisée en mode D2D peut également relayer de proche en proche les données des autres boîtiers d'interface de communication sécurisée identiques.

Lorsque la communication utilise un réseau d'opérateur, ce réseau peut être un réseau mobile tactique (par exemple Auxylium®) ou un réseau de téléphonie mobile civil.

Le boîtier d'interface de communication sécurisée selon l'invention peut comprendre notamment, sans que l'invention soit limitée à cet égard, un ou plusieurs éléments parmi :
- une carte-mère support ;
- un microsystème d'exploitation sur puce NOR de type LINUX (marque déposée) ;
- un processeur de calcul central (par exemple INTEL (marque déposée) (privilégié) ou ARM (marque déposée)) ;
- un processeur de calcul graphique ;
- une unité de mémoire RAM ;
- une unité de mémoire NAND ;
- un bus de gestion radio ;
- une antenne large bande 2G (GSM/GPRS/EDGE) et/ou 3G (DC HSPA+ /HSPA+ /HSUPA /HSDPA /UMTS) ;
- une antenne LTE (4G catégorie 4 FDD/TDD) ;
- une antenne Wi-Fi ;
- une antenne Bluetooth (marque déposée) ;
- une antenne GPS haute sensibilité (UHS) ;
- un connecteur d'antenne externe ;
- une carte SIM configurable ;
- un bandeau d'interface Homme/Machine (bouton(s) et/ou diode(s) électroluminescente(s)) ;
- une batterie amovible de grande capacité de type Lithium-ion ou de technologie supérieure, accessible par exemple par l'intermédiaire d'une trappe d'accès formée sur le boîtier d'interface de communication sécurisée ;
- un ou plusieurs connecteurs micro-USB avec lien spécifique d'attache.

Le processeur de calcul graphique permet de réaliser, en appui des processeurs centraux, les processus de chiffrement et de déchiffrement.

Les antennes du boîtier d'interface de communication sécurisée selon l'invention sont, de préférence, à l'intérieur du boîtier pour des raisons d'encombrement global du boîtier mais peuvent également, sans s'écarter du cadre de la présente invention, être externes, détachables ou non. Chaque antenne est associée à un circuit de traitement du signal adapté, également situé dans le boîtier. Les blocs de traitement du signal peuvent être mutualisés sur un ou plusieurs blocs communs à plusieurs antennes.

Le boîtier d'interface de communication sécurisée selon l'invention peut prendre la forme d'une coque en métal, de préférence en aluminium, recouverte d'un revêtement antichoc et antidérapant en caoutchouc et plastique moulé.

Selon une caractéristique particulière de l'invention, le boîtier d'interface de communication sécurisée répond à la norme IP57 relative au niveau de protection qu'offre un matériel aux intrusions de corps solides et liquides.

L'intérieur du boîtier d'interface de communication sécurisée peut être équipé d'une plaque dissipatrice de chaleur.

Avantageusement, le poids du boîtier d'interface de communication sécurisée n'excède pas 220g avec la batterie, bien que l'invention ne soit pas limitée à cet égard.

Avantageusement, le boîtier d'interface de communication sécurisée selon l'invention peut présenter des dimensions le rendant facilement transportable. Le boîtier d'interface de communication sécurisée selon l'invention peut par exemple être portatif, et avoir des dimensions de 130 mm de longueur, 80 mm de largeur, et 28 mm d'épaisseur, sans que l'invention ne soit limitée à cet égard. Il peut donc présenter sensiblement les dimensions et l'encombrement d'un téléphone portable, être léger, et donc facilement transportable par l'utilisateur.

Le chiffrement peut notamment utiliser des clés gouvernementales validées par l'Agence Nationale de Sécurité des Systèmes d'Information, et se composer de l'échange de clés symétriques après une reconnaissance et un transfert par clés asymétriques.

Le boîtier d'interface de communication sécurisée supporte le mode IPv6/IPv4 dual stack, mais l'invention n'est pas limitée à ce seul mode.

Le boîtier d'interface de communication sécurisée peut avantageusement comprendre des ports d'entrée/sortie, par exemple une prise pour une antenne externe, qui s'ajoutera aux antennes internes, et une ou plusieurs prises micro USB, servant par exemple pour le rechargement de la batterie, une connexion filaire par câble avec le dispositif portable apparié, ou une connexion de maintenance.

Le boîtier d'interface de communication sécurisée peut également comprendre des éléments d'interface utilisateur, tels qu'une ou plusieurs diodes électroluminescentes ou un ou plusieurs boutons, servant notamment à vérifier l'appariement du boîtier d'interface de communication sécurisée avec un dispositif portable, son niveau de batterie, ou à réaliser la procédure d'appariement avec le dispositif portable.

L'invention a donc pour objet un boîtier d'interface de communication sécurisée tel que défini dans la revendication 1, et comprenant :
- une interface de gestion ;
- une alimentation électrique commandée par l'interface de gestion ;
- un module de communication courte distance avec un dispositif portable, commandé par l'interface de gestion ;
- un module de chiffrement/déchiffrement de la communication courte distance entre le boîtier d'interface de communication sécurisée et le dispositif portable, commandé par l'interface de gestion ;
- un module de communication longue distance, commandé par l'interface de gestion ;
- un module de chiffrement/déchiffrement de la communication longue distance, commandé par l'interface de gestion ; et
- un module de calcul de position du boîtier d'interface de communication sécurisée, commandé par l'interface de gestion.

L'interface de gestion peut communiquer avec les différents modules par un ou plusieurs bus de communication.

Les modules décrits ci-dessus sont des éléments fonctionnels, qui peuvent être mis en oeuvre dans un ou plusieurs composants matériels, par exemple un ou plusieurs parmi des processeurs, des microprocesseurs, des microcontrôleurs, des circuits intégrés spécifiques à l'application (ASIC), des matrices prédiffusées programmables par l'utilisateur (FPGA).

Comme indiqué plus haut, la batterie peut être une batterie amovible de grande capacité de type Lithium-ion ou de technologie supérieure, accessible par exemple par l'intermédiaire d'une trappe d'accès formée sur le boîtier d'interface de communication sécurisée.

Par communication courte distance, on entend des communications dans un rayon de trois mètres maximum entre le dispositif portable et le boîtier d'interface de communication sécurisée, pouvant être assurée par un câble reliant le dispositif portable et le boîtier d'interface de communication sécurisée ou une connexion sans fil de type Bluetooth ® (par exemple) ou toute autre technologie de communication sans fil.

Par communication longue distance, on entend des communications sans fil entre un ou plusieurs boîtiers d'interface de communication sécurisée, soit de manière directe ou de manière relayée (D2D), soit au travers d'un réseau de téléphonie mobile civil ou tactique. Selon un mode de réalisation de l'invention, le module de communication courte distance est un module de communication par norme Bluetooth®, un module de communication par norme Wi-Fi, un module de communication par norme Wimax, un câble ou une combinaison de ceux-ci.

L'invention n'est toutefois pas limitée à ces normes et toute évolution de ces normes ou norme future de communication courte distance est envisagée dans le cadre de la présente invention. Le module de communication courte distance peut être mis en oeuvre sous forme d'une puce avec antenne et des moyens de traitement du signal associés, l'antenne étant de préférence incorporée dans le boîtier mais pouvant également être externe, reliée à ses moyens de traitement du signal associés dans le boîtier.

Selon un mode de réalisation de l'invention, le module de communication longue distance est un module de communication par norme 2G, un module de communication par norme 3G, un module de communication par norme 4G civile, un module de communication par norme 4G hors bande, un module de communication par norme WIFI, un module de communication par norme Wimax, ou une combinaison de ceux-ci.

L'invention n'est toutefois pas limitée à ces normes, et toute évolution future de ces normes ou nouvelle norme est envisagée dans le cadre de la présente invention. Comme le module de communication courte distance, le module de communication longue distance peut être mis en oeuvre sous forme d'une puce avec antenne et des moyens de traitement du signal associés, l'antenne étant de préférence incorporée dans le boîtier mais pouvant également être externe, reliée à ses moyens de traitement du signal associés dans le boîtier.

Selon un mode de réalisation de l'invention, le module de calcul de position est un système GPS civil, un système GPS code Y, un système GLONASS, un système GALILEO, facultativement couplé à un système GPS code Y, ou une combinaison d'un ou plusieurs de ceux-ci.

L'invention n'est toutefois pas limitée à ces systèmes, et toute évolution future de ces systèmes ou tout nouveau système est envisagé dans le cadre de la présente invention. Ce module peut également peut être mis en oeuvre sous forme d'une puce avec antenne et des moyens de traitement du signal associés, l'antenne étant de préférence incorporée dans le boîtier mais pouvant également être externe, reliée à ses moyens de traitement du signal associés dans le boîtier.

Selon un mode de réalisation de l'invention, l'interface de gestion comporte un système d'exploitation embarqué. A titre d'exemple, on peut envisager un micro-système d'exploitation Linux (marque déposée) sans que l'invention soit ainsi limitée.

Selon un mode de réalisation de l'invention, l'interface de gestion comporte un premier processeur en charge du pilotage des différents éléments du boîtier d'interface de communication sécurisée et du chiffrement/déchiffrement des communications courte distance et un deuxième processeur en charge du chiffrement/déchiffrement des communications longue distance.

Des modes de réalisation à un seul processeur exécutant toutes les tâches ou à plus de deux processeurs sont également envisagés dans le cadre de la présente invention.

Selon un mode de réalisation de l'invention, le boîtier d'interface de communication sécurisée comprend en outre un module de mémoire, facultativement amovible, stockant les clés de chiffrement/déchiffrement des communications courte distance et les clés chiffrement/déchiffrement des communications longue distance. Le module de mémoire peut être mis en oeuvre sous forme d'une carte flash ou d'une carte SIM, ou en tant que mémoire intégrée à un élément de type processeur, microprocesseur, microcontrôleur par exemple.

Selon un mode de réalisation de l'invention, le module de mémoire stocke en outre un certificat d'authentification du détenteur du boîtier d'interface de communication sécurisée. Avantageusement, le module de mémoire peut comprendre plusieurs certificats en cas de révocation suite à perte ou vol.

Selon un mode de réalisation de l'invention, chaque module de communication longue distance comprend une antenne correspondante, une pâte thermique étant disposée selon une couche de forme semi-tubulaire sur la surface interne de chaque antenne, ladite pâte thermique étant en contact thermique à chaque extrémité de l'antenne avec une pièce de dissipation thermique constituée d'une alternance de pâte thermique et de métal (notamment du cuivre), ladite pièce de dissipation thermique étant reliée thermiquement à une plaque de dissipation thermique disposée dans le boîtier.

Le contact pâte thermique appliquée sur antenne/pâte thermique appliquée sur la plaque de dissipation thermique assure une dissipation de chaleur optimale.

Selon un mode de réalisation de l'invention, le boîtier est constitué d'une coque métallique, de préférence en aluminium, recouverte d'un revêtement antichoc et antidérapant, de préférence en caoutchouc et plastique moulé.

Selon un mode de réalisation de l'invention, le boîtier comprend en outre un ou plusieurs ports d'entrée/sortie commandés par l'interface de gestion, par exemple des ports micro-USB, sans que l'invention ne soit limitée à ce type de port. D'autres types de port peuvent ainsi être envisagés, par exemple de type C, Lightning (marque déposée de la société Apple Inc.), Firewire (marque déposée) et toute évolution future de ces normes ou nouvelle norme.

Selon un mode de réalisation de l'invention, le boîtier comprend en outre un module d'extension, comprenant un connecteur relié à l'interface de gestion par un bus de communication pour un échange de signaux de commande et/ou de données avec l'interface de gestion. On peut ainsi citer comme exemple de bus les bus de type miniPCI (marque déposée), M.2 du format NGFF (Next Generation Form Factor), PCI-SIG (marque déposée), et toute évolution future de ces normes ou nouvelle norme.

Selon un mode de réalisation de l'invention, le boîtier d'interface de communication sécurisée comporte un boîtier d'évolution apte à accéder aux autres modules du boîtier d'interface de communication sécurisée. L'invention a également pour objet un ensemble de communication sécurisée tel que défini dans la revendication 14. L'invention a également pour objet un procédé de communication sécurisée tel que défini dans la revendication 15.

Il existe deux modes de génération des clés et certificats : en mode dit centralisé (réseau de type étoile à un maître et N esclaves), les clés sont récupérées par le boîtier d'interface de communication sécurisée auprès du maître (serveur, ordinateur, balise réseau...) à partir du couple clé publique/clé privée et de certificats (de type X.509 préférentiellement mais ce format est non exclusif) stockés préalablement dans le boîtier d'interface de communication sécurisée. Ce stockage préalable peut être effectué par un administrateur ou par l'utilisateur via un dispositif d'identification (carte RFID, support de stockage amovible tel qu'une clé micro-USB ou une carte microSD (marque déposée). En mode D2D où la génération de clés peut se faire via une image ou des mouvements aléatoires sur un écran, un boîtier maître auto-désigné distribue les clés symétriques (le maître peut changer en fonction de la reconfiguration du réseau via la perte du poste maître initial) grâce aux clés publique/privée et les certificats (de type OpenPGP préférentiellement mais ce format est non exclusif) stockés préalablement dans les autres boîtiers. Ce stockage préalable peut être effectué par un administrateur ou par l'utilisateur via un dispositif d'identification (carte RFID, support de stockage amovible tel qu'une clé micro-USB ou une carte microSD (marque déposée). Le système d'exploitation du dispositif portable peut être virtualisé sur le boîtier d'interface de communication sécurisée auquel il est apparié, afin de commander, par l'intermédiaire de l'interface de gestion du boîtier d'interface de communication sécurisée, le dispositif portable, en particulier son interface utilisateur.

Pour mieux illustrer l'objet de la présente invention, on va en décrire ci-après un mode de réalisation préféré avec référence aux dessins annexés.

Sur ces dessins :
- la Figure 1 est un schéma fonctionnel d'un boîtier d'interface de communication sécurisée selon la présente invention ;
- la Figure 2 est un schéma fonctionnel d'un ensemble de communication sécurisée selon la présente invention ;
- la Figure 3 est un schéma fonctionnel d'un procédé de communication sécurisée de réception de données depuis un boîtier d'interface de communication sécurisée dans un mode de système d'exploitation virtualisé ;
- la Figure 4 est un schéma fonctionnel d'un procédé de communication sécurisée d'émission de données depuis un boîtier d'interface de communication sécurisée dans un mode de système d'exploitation virtualisé ;
- la Figure 5 est un schéma fonctionnel d'un procédé de communication sécurisée de réception de données depuis un boîtier d'interface de communication sécurisée dans un mode de système d'exploitation non virtualisé ;
- la Figure 6 est un schéma fonctionnel d'un procédé de communication sécurisée d'émission de données depuis un boîtier d'interface de communication sécurisée dans un mode de système d'exploitation non virtualisé.

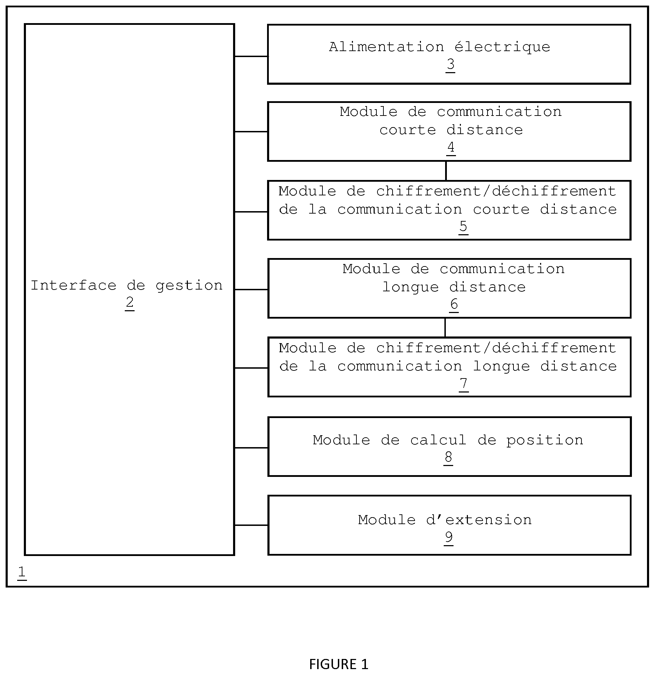

Si l'on se réfère à la Figure 1, on peut voir qu'il y est représenté un boîtier d'interface de communication sécurisée 1 selon la présente invention.

Le boîtier d'interface de communication sécurisée 1 comporte une interface de gestion 2, une alimentation électrique 3, un module de communication courte distance 4, un module de chiffrement/déchiffrement de la communication courte distance 5, un module de communication longue distance 6, un module de chiffrement/déchiffrement de la communication longue distance 7, un module de calcul de position 8 et un module d'extension 9.

L'interface de gestion 2 du boîtier d'interface de communication sécurisée 1 commande l'alimentation électrique 3, le module de communication courte distance 4, le module de chiffrement/déchiffrement de la communication courte distance 5, le module de communication longue distance 6, le module de chiffrement/déchiffrement de la communication longue distance 7, le module de calcul de position 8 et le module d'extension 9.

Le module de communication de courte distance 4 communique avec le module de chiffrement/déchiffrement de la communication courte distance 5 et le module de communication longue distance 6 communique avec le module de chiffrement/déchiffrement de la communication longue distance 7.

Le module de communication courte distance 4 est un module de communication par norme Bluetooth®, un module de communication par norme Wifi, un module de communication par norme Wimax, un câble ou une combinaison de ceux-ci.

Le module de communication longue distance 6 est un module de communication par norme 2G, un module de communication par norme 3G, un module de communication par norme 4G civile, un module de communication par norme 4G hors bande, un module de communication par norme Wifi (appartenant également au module de communication courte distance 4), un module de communication par norme Wimax (appartenant également au module de communication courte distance 4), ou une combinaison de ceux-ci.

Le module de calcul de position 8 est un système GPS civil, un système GPS code Y, un système GLONASS, un système GALILEO, facultativement couplé à un système GPS code Y, ou une combinaison d'un ou plusieurs de ceux-ci.

Le boîtier d'interface de communication sécurisée 1 comprend également un ou plusieurs ports d'entrée/sortie commandés par l'interface de gestion 2.

Le module d'extension 9 comprend un connecteur relié à l'interface de gestion 2 par un bus de communication pour un échange de signaux de commande et/ou de données avec l'interface de gestion 2.
Ainsi, le boîtier d'interface comporte, par rapport au brevet EP2106169 :
- un module de chiffrement/déchiffrement de la communication courte distance (5) entre le boîtier d'interface de communication sécurisée (1, 13, 14) et le dispositif portable (11, 12), commandé par l'interface de gestion (2) qui permet de s'affranchir de la nécessiter d'avoir une porte OU sur le dispositif portable ; Ainsi, au moins deux processeurs sont mis en oeuvre pour les actions de chiffrement/déchiffrement de telle sorte que les données sont chiffrées d'une manière différente entre les dispositifs portables et leur boîtier d'interface de communication sécurisée apparié, et entre les deux boîtiers d'interface de communication sécurisée.
- une alimentation électrique (3) commandée par l'interface de gestion (2) et un module de calcul de position (8) du boîtier d'interface de communication sécurisée (1, 13, 14), commandé par l'interface de gestion (2)permettant non seulement de gérer la charge , le déchargement de l'alimentation électrique , et permettre la localisation du boîtier d'interface mais aussi d'assurer la diffusion de cette alimentation électrique aux composants du boîtier et de désactiver l'alimentation électrique et/ou la rendre définitivement inopérante via l'action de l'interface de gestion sur l'alimentation électrique à partir des éléments recueillis par le module de calcul de position ou de rendre inopérant, toujours à partir des éléments recueillis par le module de calcul de position, un ou des modules de communication du boitier.
Ainsi, l'interface de gestion du boîtier de communication sécurisée est basée sur une architecture logicielle et matérielle.
L'architecture matérielle est constituée des unités de stockage mémoire volatiles et non volatiles reliées par des signaux électriques à des portes logiques et notamment un module de calcul numérique constitué par un processeur et un module de localisation comme une puce en capacité de traiter le signal GPS ou GPRS. Des bus de communication permettent d'assurer des échanges binaires entre l'interface de gestion et les modules de commande de l'ensemble des modules du boîtier de communication sécurisée L'architecture logicielle est composée dans la version virtualisée et non virtualisée du système d'exploitation du terminal mobile appairé au boîtier d'interface de communication sécurisée, d'une interface micrologicielle extensible unifiée, d'une couche d'abstraction matérielle, d'un système d'exploitation doté d'un noyau supportant notamment les fonctions de contrôle de l'alimentation des modules du boitier de chiffrement par liaison physique avec le module de gestion de l'énergie. L'interface de gestion dispose de schémas de reconnaissance dont les empreintes sont stockées au niveau matériel soit sur une mémoire non ré-inscriptible soit sur une mémoire ré-inscriptible. L'interface de gestion interroge au niveau logiciel les empreintes des schémas primaires et secondaires afin de les comparer aux empreintes des schémas reçus depuis le module de localisation, et le ou les modules de communication longue distance et courte distance. Les informations composants les schémas primaires et secondaires sont des intervalles de positions géographiques du boitier de chiffrement, le type de réseau sur lequel se connecte le ou les modules de communication longue distance, le type de terminal mobile appairé via les modules de communication courte distance. Les schémas primaires et secondaires sont stockés sous forme d'empreinte cryptographique. Les schémas cibles sont traités de manière à obtenir un hachés cryptographique par l'intermédiaire de l'interface de gestion via un algorithme logiciel attaché au module de calcul (processeur) puis comparés sous forme binaire à l'empreinte des schémas primaires et secondaires. Si un schéma cible s'avère concordant, une routine est activée au niveau du noyau du système d'exploitation et un code d'amorçage est écrit parallèlement en racine de l'interface micrologicielle extensible unifiée attachée au module de gestion. Dans cet exemple, il y a trois types de routines gérées par l'interface de gestion appelée ALM, COM et FLW dans la suite pour les distinguer. Les routines ALM et COM ne peuvent être initiées indépendamment et la routine COM précède toujours la routine ALM, sauf dans le cas d'un seuil de niveau d'énergie de la batterie considéré comme trop faible pour assurer le succès de la routine COM, seule la routine ALM est alors activée. La routine FLW ou COM et ALM peuvent également être activées conformément à un temps d'horloge fourni et calibré par l'unité de localisation du boîtier d'interface de communication sécurisée, doublé du temps d'horloge 32 kHz du module d'alimentation. En cas de décalage observé, ce dernier module fera référence. La routine COM lance une séquence d'activation du code COM vers chacun des micro-logiciels des modules de communication longue distance, et plus particulièrement le ou les sous-modules d'amplification RF. Ce code exécute par exemple en boucle une séquence d'émission de puissance maximale autorisée par l'amplificateur. La routine COM rend ainsi définitivement inopérant le module de communication longue distance en détériorant par rayonnement thermique l'intégrité physique des composants matériels de l'amplificateur RF. La routine ALM lance une séquence d'activation du code ALM du micro-logiciel du module assurant la diffusion de l'alimentation électrique aux composants du boîtier. Ce code provoque un court-circuit par une inversion de définition des pôles du sous-module de gestion de la décharge de la batterie. Cette séquence induit une mise en défaut de la batterie et interdit toute tentative d'alimentation du boitier. La routine FLW lance une séquence d'activation d'un code FLX du micro-logiciel du module assurant la diffusion de l'alimentation électrique aux composants du boîtier et d'un code FLY des micro-logiciels des modules de communication longue distance et courte distance. La séquence FLX induit une désactivation simple via le canal VCI/OCP du canal d'alimentation du ou des amplificateur(s) RF qui pourront être réactivés par rétablissement du micro-logiciel dans sa configuration initiale. La séquence FLY induit un décalage dans les tables d'adressage mémoire et de processus de calcul des trames d'entrée et de sortie, mais pas des trames de commande, rendant le ou les modules cibles inopérants.

La description indiquée ci-dessus des différents modules est uniquement fonctionnelle, et les différents modules peuvent être mis en oeuvre sur un ou plusieurs composants matériels, sans s'écarter du cadre de la présente invention.

En pratique, le boîtier d'interface de communication sécurisée 1 est constitué d'une coque métallique, de préférence en aluminium, recouverte d'un revêtement anti-choc et antidérapant, de préférence en caoutchouc et plastique moulé et répond à la norme IP57. Les antennes sont de préférence internes au boîtier, mais peuvent également être externes, détachables ou non.

La dissipation de la chaleur générée par les antennes peut se faire au moyen d'une pâte thermique disposée selon une couche de forme semi-tubulaire sur la surface interne de chaque antenne, ladite pâte thermique étant en contact thermique à chaque extrémité de l'antenne avec une pièce de dissipation thermique constituée d'une alternance de pâte thermique et de cuivre, ladite pièce de dissipation thermique étant reliée thermiquement à une plaque de dissipation thermique disposée dans le boîtier d'interface de communication sécurisée 1.

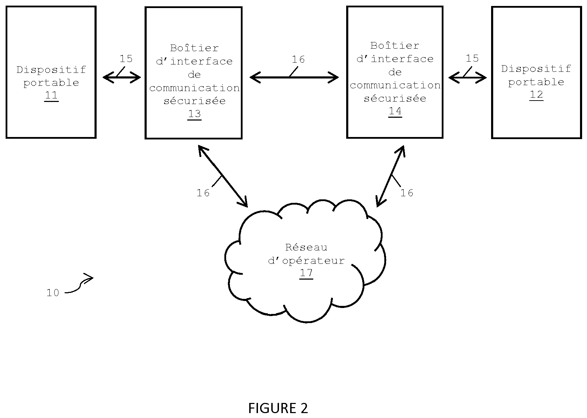

Si l'on se réfère à la Figure 2, on peut voir qu'il y est représenté un ensemble de communication sécurisée selon la présente invention.

L'ensemble de communication sécurisée 10 comprend deux dispositifs portables 11, 12, deux boîtiers d'interface de communication sécurisée 13, 14 et un réseau d'opérateur 17.

Le premier dispositif portable 11 est apparié au premier boîtier d'interface de communication sécurisée 13 et le second dispositif portable 12 est apparié au second boîtier d'interface de communication sécurisée 14.

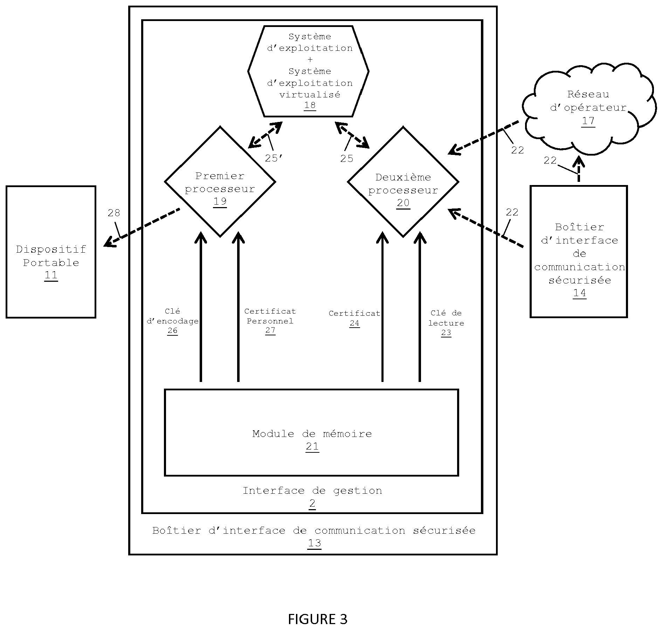

Les dispositifs portables 11, 12 communiquent de manière sécurisée avec leurs boîtiers d'interface de communication sécurisée 13, 14 respectifs par communication chiffrée courte distance 15 au moyen du module de communication courte distance 4 et du module de chiffrement/déchiffrement de communication courte distance 5 des boîtiers d'interface de communication sécurisée 13, 14, comme décrit plus en détail en référence aux Figures 3-6.

Les boîtiers d'interface de communication sécurisée 13, 14 sont aptes à communiquer par communication chiffrée longue distance 16 au moyen du module de communication longue distance 6 (ou des modules WI-FI ou Wimax du module de communication courte distance 4)et du module de chiffrement/déchiffrement de communication longue distance 7 des boîtiers d'interface de communication sécurisée 13, 14, directement ou par l'intermédiaire d'un réseau d'opérateur 17.

Le premier dispositif portable 11 peut communiquer de manière sécurisée avec le second dispositif portable 12 par échange de données entre le premier dispositif portable 11 et le premier boîtier d'interface de communication sécurisée 13 apparié par communication chiffrée courte distance 15, échange de données par communication chiffrée longue distance 16 entre les deux boîtiers d'interface de communication sécurisée 13, 14, directement ou par l'intermédiaire d'un réseau d'opérateur 17, et échange de données entre le second boîtier d'interface de communication sécurisée 14 et le second dispositif portable 12 par communication chiffrée courte distance 15.

Réciproquement, le second dispositif portable 12 peut communiquer de manière sécurisée avec le premier dispositif portable 11 par échange de données entre le second dispositif portable 12 et le second boîtier d'interface de communication sécurisée 14 apparié par communication chiffrée courte distance 15, échange de données par communication chiffrée longue distance 16 entre les deux boîtiers d'interface de communication sécurisée 13, 14, directement ou par l'intermédiaire d'un réseau d'opérateur 17, et échange de données entre le premier boîtier d'interface de communication sécurisée 13 et le premier dispositif portable 11 par communication chiffrée courte distance 15.

Pour des raisons de simplicité, seuls deux dispositifs portables ont été représentés sur la Figure 2, mais il apparaîtra à l'évidence à l'homme du métier qu'il peut y a avoir un dispositif portable émetteur et plusieurs dispositifs portables récepteurs, sans s'éloigner du cadre et des enseignements de la présente invention. De même, on peut transmettre par l'intermédiaire de plusieurs boîtiers d'interface de communication sécurisée de proche en proche.

De même, dans le schéma où il y a plusieurs dispositifs portables récepteurs, le dispositif portable émetteur peut communiquer avec une partie d'entre eux par la voie boîtier de communication sécurisée émetteur-boîtier de communication sécurisée récepteur (liaison directe) et avec une autre partie d'entre eux par la voie boîtier de communication sécurisée émetteur-réseau opéré-boîtier de communication sécurisée récepteur (liaison indirecte), sans s'éloigner du cadre et des enseignements de la présente invention.

Si l'on se réfère à la Figure 3, on peut voir qu'il y est représenté un procédé de communication sécurisée de réception de données depuis un boîtier d'interface de communication sécurisée dans un mode de système d'exploitation du dispositif portable virtualisé.

Le procédé de communication sécurisée de réception de données depuis un boîtier d'interface de communication sécurisée 13 dans un mode de système d'exploitation virtualisé comprend des premier et second dispositifs portables 11, 12 de la Figure 2, chacun apparié respectivement à un premier et un second boîtier d'interface de communication sécurisée 13, 14.

L'interface de gestion 2 du boîtier d'interface de communication sécurisée 13 comporte un système d'exploitation embarqué 18, un premier processeur 19, un deuxième processeur 20 et un module de mémoire 21.

Le premier processeur 19 est en charge du pilotage des différents éléments du boîtier d'interface de communication sécurisée 13 et du chiffrement/déchiffrement des communications courte distance et le deuxième processeur 20 est en charge du chiffrement/déchiffrement des communications longue distance. Cet exemple est illustratif uniquement, et les calculs peuvent être répartis sur un ou plusieurs processeurs dans le cadre de la présente invention.

Le module de mémoire 21 est facultativement amovible et stocke des clés de chiffrement/déchiffrement des communications courte distance, des clés de chiffrement/déchiffrement des communications longue distance et des certificats d'authentification.

Le procédé de communication sécurisée de réception de données depuis un boîtier d'interface de communication sécurisée 13 dans un mode de système d'exploitation virtualisé, où le système d'exploitation du premier dispositif portable 11 est virtualisé dans le système d'exploitation 18 du premier boîtier d'interface de communication sécurisée 13, comprend : la réception par le premier boîtier d'interface de communication sécurisée 13 d'un signal de données chiffrées 22 depuis le second boîtier d'interface de communication sécurisée 14 de manière directe ou par l'intermédiaire d'un réseau d'opérateur 17, le signal de données chiffrées 22 étant capté, démodulé puis converti par le module de communication longue distance 6 du premier boîtier d'interface de communication sécurisée 13 pour être ensuite envoyé vers l'interface de gestion 2 du premier boîtier d'interface de communication sécurisée 13, le système d'exploitation 18 du premier boîtier d'interface de communication sécurisée 13 commandant de manière permanente l'interface de gestion 2 et le premier dispositif portable 11 assurant donc un simple retour graphique et de commande à l'utilisateur ; le déchiffrement des données reçues 22 par l'intermédiaire du deuxième processeur 20 de l'interface de gestion 2, le deuxième processeur 20 récupérant une clé de lecture 23 depuis le module de mémoire 21 et contrôlant la validité de l'expéditeur par l'intermédiaire d'un certificat 24 également stocké sur le module de mémoire 21 ; le traitement des données déchiffrées 25 par le système d'exploitation 18, le système d'exploitation 18 transférant des données 25' (pouvant être identiques ou non aux données déchiffrées 25, en fonction du traitement des données déchiffrées 25 par le système d'exploitation 18) au système d'exploitation virtualisé 18 du premier dispositif portable 11 ; et le chiffrement d'une interaction d'interface homme-machine par le premier processeur 19 avec une clé d'encodage 26 stockée sur le module de mémoire 21, la signature de l'interaction d'interface homme-machine avec le certificat personnel 27 de l'utilisateur stocké sur le module de mémoire 21, et l'envoi des données chiffrées 28 de l'interaction d'interface homme-machine vers le module de communication courte distance 4 afin qu'elles soient transmises au premier dispositif portable 11.

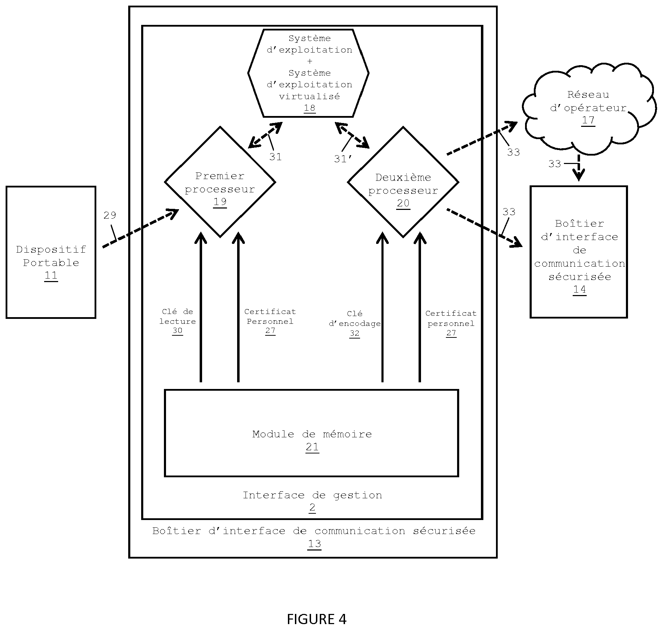

Si l'on se réfère à la Figure 4, on peut voir qu'il y est représenté un procédé de communication sécurisée d'émission de données depuis un boîtier d'interface de communication sécurisée dans un mode de système d'exploitation virtualisé.

Le procédé de communication sécurisée d'émission de données depuis un boîtier d'interface de communication sécurisée 13 dans un mode de système d'exploitation virtualisé comprend des premier et second dispositifs portables 11, 12 de la Figure 2, chacun apparié respectivement à un premier et un second boîtier d'interface de communication sécurisée 13, 14.

L'interface de gestion 2 du boîtier d'interface de communication sécurisée 13 comporte un système d'exploitation embarqué 18, un premier processeur 19, un deuxième processeur 20 et un module de mémoire 21.

Le premier processeur 19 est en charge du pilotage des différents éléments du boîtier d'interface de communication sécurisée 13 et du chiffrement/déchiffrement des communications courte distance et le deuxième processeur 20 est en charge du chiffrement/déchiffrement des communications longue distance. L'utilisation d'au moins deux processeurs pour les actions de chiffrement/déchiffrement permet :
- de chiffrer d'une manière différente entre les dispositifs portables et leur boîtier d'interface de communication sécurisée apparié, et entre les deux boîtiers d'interface de communication sécurisée,
- de choisir un processus cryptographique unique pour chacune des liaisons entre les dispositifs portables et leur boîtier d'interface de communication sécurisée apparié et un processus commun pour les échanges entre les boîtiers d'interface de communication sécurisée;
- une meilleure gestion des ressources en calcul du boitier de chiffrement par une allocation dynamique de la charge en fonction des cas d'usages utilisateurs. Ainsi, le temps de latence dans la transmission des informations peut être mieux maîtrisé et diminué ;
- une plus grande robustesse du modèle cryptographique car la perte d'un dispositifs portable apparié au boîtier d'interface de communication sécurisée n'entraîne pas la compromission du processus de chiffrement entre les boîtiers d'interface de communication sécurisée;
- sur le plan physique, d'obtenir une meilleure répartition de la dissipation thermique dans le boîtier d'interface de communication sécurisée par une distribution spatiale des unités de calcul prenant en compte une séparation physique des processeurs utile à une moindre montée en température de l'ensemble du dispositif. Ainsi, l'usure prématurée des composants est maîtrisée, tout comme une meilleure utilisation des ressources en calcul par une disponibilité accrue des composants et leur capacité à conserver une fréquence d'horloge élevée dans le temps.

Le module de mémoire 21 est facultativement amovible et stocke des clés de chiffrement/déchiffrement des communications courte distance, des clés de chiffrement/déchiffrement des communications longue distance et des certificats d'authentification.

Le procédé de communication sécurisée d'émission de données depuis un boîtier d'interface de communication sécurisée 13 dans un mode de système d'exploitation virtualisé, où le système d'exploitation du premier dispositif portable 11 est virtualisé dans le système d'exploitation 18 du premier boîtier d'interface de communication sécurisée 13, comprend : la réception par le premier boîtier d'interface de communication sécurisée 13 d'un signal de données chiffrées 29 (données de commande ou données issues des capteurs du dispositif portable 11 telles que images, sons, ...) depuis le premier dispositif portable 11, le signal de données chiffrées 29 étant capté, démodulé puis converti par le module de communication courte distance 4 du premier boîtier d'interface de communication sécurisée 13 pour être ensuite envoyé vers l'interface de gestion 2 du premier boîtier d'interface de communication sécurisée 13 ; le déchiffrement des données reçues 29 par l'intermédiaire du premier processeur 19 de l'interface de gestion 2, le premier processeur 19 récupérant une clé de lecture 30 depuis le module de mémoire 21 et contrôlant la validité de l'expéditeur par l'intermédiaire d'un certificat personnel 27 également stocké sur le module de mémoire 21 ; le traitement des données déchiffrées 31 par le système d'exploitation 18, le système d'exploitation 18 transférant celles-ci au système d'exploitation virtualisé 18 du premier dispositif portable 11 ; le système d'exploitation virtualisé 18 peut alors, si nécessaire, envoyer des données 31' via le chiffrement par le deuxième processeur 20 avec une clé d'encodage 32 stockée commande 31' avec le certificat personnel 27 stocké sur le module de mémoire 21 et l'envoi des données chiffrées 33 vers le module de communication longue distance 6 afin qu'elles soient transmises au second boîtier d'interface de communication sécurisée 14 de manière directe ou par l'intermédiaire d'un réseau d'opérateur 17.

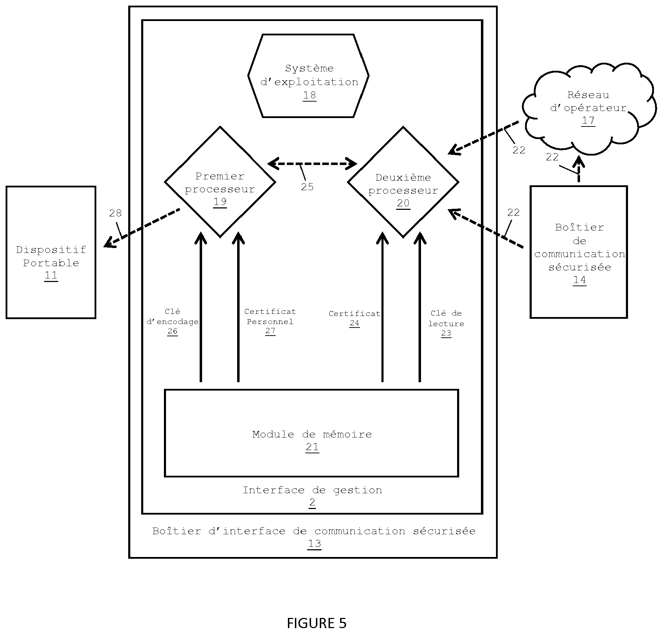

Si l'on se réfère à la Figure 5, on peut voir qu'il y est représenté un procédé de communication sécurisée de réception de données depuis un boîtier d'interface de communication sécurisée dans un mode de système d'exploitation non virtualisé.

Le procédé de communication sécurisée de réception de données depuis un boîtier d'interface de communication sécurisée 13 dans un mode de système d'exploitation non virtualisé comprend des premier et second dispositifs portables 11, 12 de la Figure 2, chacun apparié respectivement à un premier et un second boîtier d'interface de communication sécurisée 13, 14.

L'interface de gestion 2 du boîtier d'interface de communication sécurisée 13 comporte un système d'exploitation embarqué 18, un premier processeur 19, un deuxième processeur 20 et un module de mémoire 21.

Le premier processeur 19 est en charge du pilotage des différents éléments du boîtier d'interface de communication sécurisée 13 et du chiffrement/déchiffrement des communications courte distance et le deuxième processeur 20 est en charge du chiffrement/déchiffrement des communications longue distance.

Le module de mémoire 21 est facultativement amovible et stocke des clés de chiffrement/déchiffrement des communications courte distance, des clés de chiffrement/déchiffrement des communications longue distance et des certificats d'authentification.

Le procédé de communication sécurisée de réception de données depuis un boîtier d'interface de communication sécurisée 13 dans un mode de système d'exploitation non virtualisé comprend : la réception par le premier boîtier d'interface de communication sécurisée 13 d'un signal de données chiffrées 22 depuis le second boîtier d'interface de communication sécurisée 14 de manière directe ou par l'intermédiaire d'un réseau d'opérateur 17, le signal de données chiffrées 22 étant capté, démodulé puis converti par le module de communication longue distance 6 du premier boîtier d'interface de communication sécurisée 13 pour être ensuite envoyé vers l'interface de gestion 2 du premier boîtier d'interface de communication sécurisée 13 ; le déchiffrement des données reçues 22 par l'intermédiaire du deuxième processeur 20 de l'interface de gestion 2, le deuxième processeur 20 récupérant une clé de lecture 23 depuis le module de mémoire 21 et contrôlant la validité de l'expéditeur par l'intermédiaire d'un certificat 24 également stocké sur le module de mémoire 21 ; la transmission des données déchiffrées 25 au premier processeur 19 ; le chiffrement des données déchiffrées reçues 25 par le premier processeur 19 en utilisant une clé d'encodage 26 stockée sur le module de mémoire 21 et un certificat personnel 27 de l'utilisateur stocké sur le module de mémoire 21 ; et l'envoi des données chiffrées 28 vers le module de communication courte distance 4 afin qu'elles soient transmises au premier dispositif portable 11.

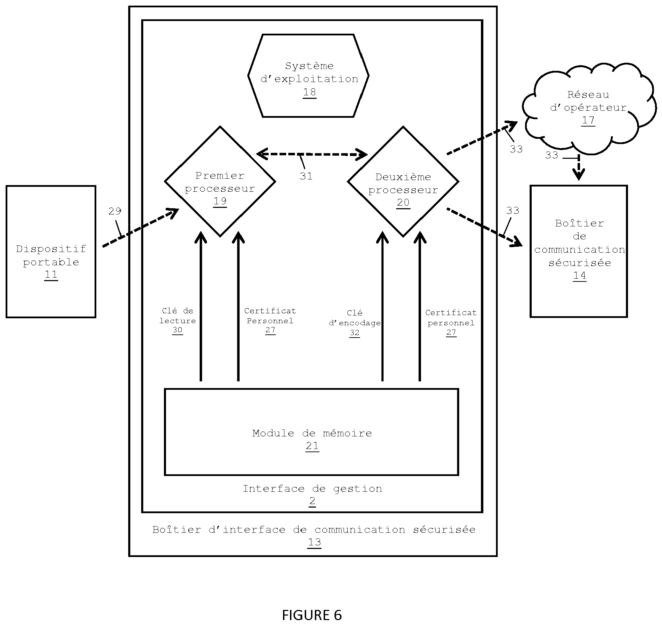

Si l'on se réfère à la Figure 6, on peut voir qu'il y est représenté un procédé de communication sécurisée d'émission de données depuis un boîtier d'interface de communication sécurisée dans un mode de système d'exploitation non virtualisé.

Le procédé de communication sécurisée d'émission de données depuis un boîtier d'interface de communication sécurisée 13 dans un mode de système d'exploitation non virtualisé comprend des premier et second dispositifs portables 11, 12 chacun apparié respectivement à un premier et un second boîtier d'interface de communication sécurisée 13, 14.

L'interface de gestion 2 du boîtier d'interface de communication sécurisée 13 comporte un système d'exploitation embarqué 18, un premier processeur 19, un deuxième processeur 20 et un module de mémoire 21.

Le premier processeur 19 est en charge du pilotage des différents éléments du boîtier d'interface de communication sécurisée 13 et du chiffrement/déchiffrement des communications courte distance et le deuxième processeur 20 est en charge du chiffrement/déchiffrement des communications longue distance.

Le module de mémoire 21 est facultativement amovible et stocke des clés de chiffrement/déchiffrement des communications courte distance, des clés de chiffrement/déchiffrement des communications longue distance et des certificats d'authentification.

Le procédé de communication sécurisée d'émission de données depuis un boîtier d'interface de communication sécurisée 13 dans un mode de système d'exploitation non virtualisé comprend : la réception par le premier boîtier d'interface de communication sécurisée 13 d'un signal de données chiffrées 29 depuis le premier dispositif portable 11, le signal de données chiffrées 29 étant capté, démodulé puis converti par le module de communication courte distance 4 du premier boîtier d'interface de communication sécurisée 13 pour être ensuite envoyé vers l'interface de gestion 2 du premier boîtier d'interface de communication sécurisée 13 ; le déchiffrement des données reçues 29 par l'intermédiaire du premier processeur 19 de l'interface de gestion 2, le premier processeur 19 récupérant une clé de lecture 30 depuis le module de mémoire 21 et contrôlant la validité de l'expéditeur par l'intermédiaire d'un certificat personnel 27 également stocké sur le module de mémoire 21 ; la transmission des données déchiffrées 31 au deuxième processeur 20 ; et le chiffrement des données 31 par le deuxième processeur 20 avec une clé d'encodage 32 stockée sur le module de mémoire 21, la signature des données 31 avec le certificat personnel 27 stocké sur le module de mémoire 21 et l'envoi des données chiffrées 33 vers le module de communication longue distance 6 afin qu'elles soient transmises au second boîtier d'interface de communication sécurisée 14 de manière directe ou par l'intermédiaire d'un réseau d'opérateur 17.

Les éléments secrets du boîtier d'interface de communication sécurisée sont stockés dans une mémoire amovible avec les clés symétriques de chiffrement et de déchiffrement correspondants aux algorithmes des processeurs et ainsi que les certificats d'authentification des différents interlocuteurs distants. Une carte SIM stocke le certificat personnel d'authentification du détenteur du boîtier d'interface de communication sécurisée. Ce même certificat personnel est stocké dans le dispositif portable apparié ainsi au boîtier d'interface de communication sécurisée. Une même carte SIM peut stocker plusieurs certificats afin de gérer la problématique de révocation par perte ou vol de boîtiers d'interface de communication sécurisée distants.

L'indicateur temporel du boîtier d'interface de communication sécurisée est utile notamment aux actions de chiffrement et de déchiffrement. L'indicateur temporel est donné soit par le signal GPS reçu via les circuits de traitement de signal des antennes de calcul de position (GPS) ou via un top horaire du maître du réseau. Les ensembles GPS alimentent également la position de l'utilisateur qui est soit transmise au dispositif portable (configuration non virtualisé), soit récupérée par le système d'exploitation interne pour être intégrée au système d'exploitation virtualisé du boîtier d'interface de communication sécurisée (configuration virtualisé).

L'appariement entre le boîtier d'interface de communication sécurisée et son dispositif portable associé s'établit grâce aux certificats partagés dans chacune des cartes SIM (carte SIM du dispositif portable et carte SIM du boîtier d'interface de communication sécurisée) et une authentification par différents moyens standards (code d'accès, code PIN...) ou une authentification forte si le dispositif portable en est équipé (empreinte digitale, reconnaissance faciale, reconnaissance vocale...). C'est le protocole Bluetooth® ou la connexion par câble qui supportera l'échange de données permettant d'apparier les deux dispositifs. La connexion par câble est ainsi en capacité de suppléer la connectivité Bluetooth® en cas de perturbations électromagnétiques (brouillage...).

Afin de fournir une interaction entre le boîtier d'interface de communication sécurisée et l'utilisateur, l'ensemble des informations de niveaux de batterie ou de pannes du système sont relayées vers le dispositif portable. Une DEL et un bouton poussoir sont également intégrés au boîtier d'interface de communication sécurisée et gérés par le système d'exploitation interne du boîtier d'interface de communication sécurisée afin de fournir les éléments essentiels tels que le niveau de batterie, la charge du système, ou son appariement.

L'alimentation énergétique de l'ensemble des composants du boîtier d'interface de communication sécurisée est assuré par une batterie équipée d'un module de gestion permettant d'optimiser la charge et le déchargement de la batterie.

Afin d'alimenter la batterie et de la charger, une alimentation électrique externe peut être connectée au boîtier d'interface de communication sécurisée par des connecteurs. La gestion de la charge et de la protection contre les surtensions est assurée via le bus de gestion batterie.

En mode réseau mobile opéré, les clés symétriques de chiffrement destinées aux processeurs et les certificats des usagers sont stockés sur un ou plusieurs serveurs de référence. Le certificat d'authentification personnel permet à l'utilisateur, à partir d'un couple de clés asymétriques privée/publique, de recevoir à distance la liste des clés et des certificats en temps réel. Ce dispositif permet également de révoquer du réseau des utilisateurs ayants compromis leur boîtier d'interface de communication sécurisée. Ainsi, comparativement au brevet EP2106169, l'invention ne nécessite pas, pour le transfert des clés de chiffrement, d'obtenir soit une connexion physique entre le terminal principal et le dispositif portable (par exemple, un *smartphone*) soit un transfert physique d'unité mémoire.

L'implémentation logicielle du boîtier d'interface de communication sécurisée intervient soit par la connexion d'un câble appartenant à système informatique autorisé et relié à l'un des ports du boîtier d'interface de communication sécurisée, soit par l'intermédiaire du réseau mobile opéré qui propage les données de configuration depuis un serveur dédié. Les échanges sont chiffrés et déchiffrés par l'intermédiaire du ou des processeurs dans le boîtier d'interface de communication sécurisée dans lequel sont injectés les clés de chiffrement et de lecture avec les certificats stockés en mémoire.

Par ailleurs, un logement d'évolution peut être prévu, lequel permet d'accueillir un module externe susceptible de porter une technologie encore non développée. Ce module externe peut accéder aux autres modules du boîtier d'interface de communication sécurisée.

## Revendications

1. Boîtier d'interface de communication sécurisée (1, 13, 14), comprenant :
- une interface de gestion (2) ;
- une alimentation électrique (3) commandée par l'interface de gestion (2) ;
- un module de communication courte distance (4) avec un dispositif portable (11, 12), commandé par l'interface de gestion (2) ;
- un module de chiffrement/déchiffrement de la communication courte distance (5) entre le boîtier d'interface de communication sécurisée (1, 13, 14) et le dispositif portable (11, 12), commandé par l'interface de gestion (2) ;
- un module de communication longue distance (6), commandé par l'interface de gestion (2) ;
- un module de chiffrement/déchiffrement de la communication longue distance (7), commandé par l'interface de gestion (2) ;
- un module de calcul de position (8) du boîtier d'interface de communication sécurisée (1, 13, 14), commandé par l'interface de gestion (2) ; et
le boîtier d'interface de communication sécurisée (1, 13, 14) étant en outre **caractérisé par le fait qu'**il est adapté de manière à permettre que :
- l'alimentation électrique (3) soit désactivée et/ou rendue définitivement inopérante via l'action de l'interface de gestion (2) sur l'alimentation électrique (3) à partir des éléments recueillis par le module de calcul de position (8), ou que
- au moins un des modules de communication (4, 6) du boîtier (1, 13, 14) soit rendu inopérant à partir des éléments recueillis par le module de calcul de position (8).

2. Boîtier d'interface de communication sécurisée (1, 13, 14) selon la revendication 1, **caractérisé par le fait que** le module de communication courte distance (4) est un module de communication par norme Bluetooth®, un module de communication par norme Wifi, un module de communication par norme Wimax, un câble ou une combinaison de ceux-ci.

3. Boîtier d'interface de communication sécurisée (1, 13, 14) selon la revendication 1 ou la revendication 2, **caractérisé par le fait que** le module de communication longue distance (6) est un module de communication par norme 2G, un module de communication par norme 3G, un module de communication par norme 4G civile, un module de communication par norme 4G hors bande, un module de communication par norme WIFI, un module de communication par norme Wimax, ou une combinaison de ceux-ci.

4. Boîtier d'interface de communication sécurisée (1, 13, 14) selon l'une des revendications 1 à 3, **caractérisé par le fait que** le module de calcul de position (8) est un système GPS civil, un système GPS code Y, un système GLONASS, un système GALILEO, un système GALILEO couplé à un système GPS code Y, ou une combinaison d'un ou plusieurs de ceux-ci.

5. Boîtier d'interface de communication sécurisée (1, 13, 14) selon l'une des revendications 1 à 4, **caractérisé par le fait que** l'interface de gestion (2) comporte un système d'exploitation embarqué (18).

6. Boîtier d'interface de communication sécurisée (1, 13, 14) selon l'une des revendications 1 à 5, **caractérisé par le fait que** l'interface de gestion (2) comporte un premier processeur (19) en charge du pilotage des différents éléments du boîtier d'interface de communication sécurisée (1, 13, 14) et du chiffrement/déchiffrement des communications courte distance et un deuxième processeur (20) en charge du chiffrement/déchiffrement des communications longue distance.

7. Boîtier d'interface de communication sécurisée (1, 13, 14) selon l'une des revendications 1 à 6, **caractérisé par le fait qu'**il comprend en outre un module de mémoire (21) ou un module de mémoire amovible, stockant les clés de chiffrement/déchiffrement (26, 30) des communications courte distance et les clés chiffrement/déchiffrement (23, 32) des communications longue distance.

8. Boîtier d'interface de communication sécurisée selon la revendication 7, **caractérisé par le fait que** le module de mémoire stocke en outre un certificat d'authentification (24, 27) du détenteur du boîtier d'interface de communication sécurisée (1, 13, 14).

9. Boîtier d'interface de communication sécurisée (1, 13, 14) selon l'une des revendications 1 à 8, **caractérisé par le fait que** chaque module de communication longue distance (6) comprend une antenne correspondante, une pâte thermique étant disposée selon une couche de forme semi-tubulaire sur la surface interne de chaque antenne, ladite pâte thermique étant en contact thermique à chaque extrémité de l'antenne avec une pièce de dissipation thermique constituée d'une alternance de pâte thermique et de métal, ladite pièce de dissipation thermique étant reliée thermiquement à une plaque de dissipation thermique disposée dans le boîtier.

10. Boîtier d'interface de communication sécurisée (1, 13, 14) selon l'une des revendications 1 à 9, **caractérisé par le fait qu'**il est constitué d'une coque métallique recouverte d'un revêtement antichoc et antidérapant.

11. Boîtier d'interface de communication sécurisée (1, 13, 14) selon l'une des revendications 1 à 10, **caractérisé par le fait qu'**il comprend en outre un ou plusieurs ports d'entrée/sortie commandés par l'interface de gestion (2).

12. Boîtier d'interface de communication sécurisée (1, 13, 14) selon l'une des revendications 1 à 11, **caractérisé par le fait qu'**il comprend en outre un module d'extension (9), comprenant un connecteur relié à l'interface de gestion (2) par un bus de communication pour un échange de signaux de commande et/ou de données avec l'interface de gestion (2).

13. Boîtier d'interface de communication sécurisée (1, 13, 14) selon l'une des revendications 1 à 12, **caractérisé en ce qu'**il comporte un boitier d'évolution apte à accéder aux autres modules du boîtier d'interface de communication sécurisée.

14. Ensemble de communication sécurisée (10), comprenant deux dispositifs portables (11, 12) et deux boîtiers d'interface de communication sécurisée (1, 13, 14) selon l'une quelconque des revendications 1 à 12, chacun des deux dispositifs portables étant apparié à l'un des deux boîtiers d'interface de communication sécurisée (1, 13, 14) et communiquant de manière sécurisée avec celui-ci par communication chiffrée au moyen des modules de communication courte distance (4) et de chiffrement/déchiffrement de communication courte distance (5), les deux boîtiers d'interface de communication sécurisée (1, 13, 14) étant aptes à communiquer par communication chiffrée longue distance au moyen des modules de communication longue distance (6) et de chiffrement/déchiffrement de communication longue distance (7), les dispositifs portables (11, 12) communiquant de manière sécurisée par échange de données entre le dispositif portable (11, 12) expéditeur et son boîtier d'interface de communication sécurisée (1, 13, 14) apparié par communication chiffrée courte distance, échange de données par communication chiffrée longue distance entre les deux boîtiers d'interface de communication sécurisée (1, 13, 14), et échange de données entre le boîtier d'interface de communication sécurisée (1, 13, 14) apparié au dispositif portable (11, 12) destinataire et le dispositif portable (11, 12) destinataire par communication chiffrée courte distance, les données étant chiffrées/déchiffrées dans chaque boîtier d'interface de communication sécurisée (1, 13, 14) de telle sorte que les données sont chiffrées d'une manière différente entre les dispositifs portables (11, 12) et leur boîtier d'interface de communication sécurisée (1, 13, 14) apparié, et entre les deux boîtiers d'interface de communication sécurisée (1, 13, 14).

15. Procédé de communication sécurisée au sein d'un ensemble de communication sécurisée (10) selon la revendication 14, ensemble dont l'un des dispositifs portables (11, 12), désigné dispositif portable émetteur, est apparié à l'un des boîtiers d'interface de communication sécurisée (1, 13, 14), désigné boîtier émetteur, et dont au moins un autre des dispositifs portables (11, 12), désigné dispositif portable récepteur, est chacun apparié à un autre des boîtiers d'interface de communication sécurisée (1, 13, 14), désigné boîtier récepteur, le procédé comprenant
- la génération de données sur le dispositif portable émetteur (11, 12) ;
- le chiffrement de données sur le dispositif portable émetteur (11, 12) ;
- l'envoi des données chiffrées du dispositif portable (11, 12) émetteur au boîtier émetteur par communication courte distance ;
- le déchiffrement des données chiffrées au moyen d'une clé de lecture (30) et d'un certificat personnel (27) situés dans le module de mémoire (21) du boîtier émetteur ;
- le chiffrement des données déchiffrées au moyen d'une clé d'encodage (32) et d'un certificat personnel (27) situés dans le module de mémoire (21) du boîtier émetteur ;
- l'envoi des données ainsi chiffrées à un ou plusieurs boîtiers récepteurs par communication longue distance ;
et sur chaque boîtier récepteur :
- le déchiffrement des données chiffrées au moyen d'une clé de lecture (23) et d'un certificat personnel (24) situés dans le module de mémoire (21) du boîtier récepteur ;
- le chiffrement des données déchiffrées au moyen d'une clé d'encodage (26) et d'un certificat personnel (27) situés dans le module de mémoire (21) du boîtier récepteur ;
- l'envoi des données ainsi chiffrées au dispositif portable (11, 12) récepteur par communication courte distance ;
le déchiffrement des données chiffrées par le dispositif portable (11, 12) récepteur ; le système d'exploitation du dispositif portable (11, 12) étant virtualisé sur le boîtier d'interface de communication sécurisée (1, 13, 14) auquel il est apparié, afin de commander, par l'intermédiaire de l'interface de gestion (2) du boîtier d'interface de communication sécurisée (1, 13, 14), le dispositif portable (11, 12).

## Patentansprüche

1. Gesicherte Schnittstellen-Kommunikationsbox (1, 13, 14), die folgendes umfasst:.
- eine Verwaltungsschnittstelle (2);
- eine Stromversorgung (3), gesteuert von der Verwaltungsschnittstelle (2);
- ein Kurzstrecken-Kommunikationsmodul (4) mit einer tragbaren Vorrichtung (11, 12), gesteuert von der Verwaltungsschnittstelle (2);
- ein Verschlüsselung/Entschlüsselungs-Modul für die Kurzstrecken-Kommunikation (5) zwischen der gesicherten Schnittstellen-Kommunikationsbox (1, 13, 14) und der tragbaren Vorrichtung (11, 12), gesteuert von der Verwaltungsschnittstelle (2);
- ein Langstrecken-Kommunikationsmodul (6), das von der Verwaltungsschnittstelle (2) gesteuert wird;
- ein Verschlüsselung/Entschlüsselungs-Modul für die Langstrecken-Kommunikation (7), das von der Verwaltungsschnittstelle (2) gesteuert wird;
- ein Positionsberechnungsmodul (8) für die gesicherte Schnittstellen-Kommunikationsbox (1, 13, 14), das von der Verwaltungsschnittstelle (2) gesteuert wird; und
die gesicherte Schnittstellen-Kommunikationsbox (1, 13, 14) ist außerdem **gekennzeichnet dadurch, dass** sie angepasst ist, um zu gestatten, dass:
- die Stromversorgung (3) ausgeschaltet und/oder endgültig außer Betrieb gesetzt wird, durch die Einwirkung der Verwaltungsschnittstelle (2) auf die Stromversorgung (3) ausgehend von den vom Positionsberechnungsmodul (8) gesammelten Elementen, oder dass
- mindestens eines der Kommunikationsmodule (4, 6) der Box (1, 13, 14) außer Betrieb gesetzt wird, ausgehend von den vom Positionsberechnungsmodul (8) gesammelten Elementen.

2. Gesicherte Schnittstellen-Kommunikationsbox (1, 13, 14) nach Anspruch 1, **gekennzeichnet dadurch, dass** das Kurzstrecken-Kommunikationsmodul (4) ein Bluetooth®-Kommunikationsmodul, ein Wifi-Kommunikationsmodul, ein Wimax-Kommunikationsmodul, ein Kabel oder eine Kombination von diesen ist.

3. Gesicherte Schnittstellen-Kommunikationsbox (1, 13, 14) nach Anspruch 1 oder Anspruch 2, **gekennzeichnet dadurch, dass** das Langstrecken-Kommunikationsmodul (6) ein Kommunikationsmodul nach der Norm 2G, ein Kommunikationsmodul nach der Norm 3G, ein Kommunikationsmodul nach der Norm 4G zivil, ein Kommunikationsmodul nach der Norm 4G bandextern, ein Kommunikationsmodul nach der Norm WIFI, ein Kommunikationsmodul nach der Norm Wimax oder eine Kombination von diesen ist.

4. Gesicherte Schnittstellen-Kommunikationsbox (1, 13, 14) nach einem der Ansprüche 1 bis 3, **gekennzeichnet dadurch, dass** das Positionsberechnungsmodul (8) ein ziviles GPS-System, ein GPS-System Code Y, ein GLONASS-System, ein GALILEO-System, ein GALILEO-System verbunden mit einem GPS-System Code Y oder eine Kombination von einem oder mehreren von diesen ist.

5. Gesicherte Schnittstellen-Kommunikationsbox (1, 13, 14) nach einem der Ansprüche 1 bis 4, **gekennzeichnet dadurch, dass** die Verwaltungsschnittstelle (2) ein eingebettetes Betriebssystem (18) umfasst.

6. Gesicherte Schnittstellen-Kommunikationsbox (1, 13, 14) nach einem der Ansprüche 1 bis 5, **gekennzeichnet dadurch, dass** die Verwaltungsschnittstelle (2) einen ersten Prozessor (19) zur Steuerung der verschiedenen Elemente der gesicherten Schnittstellen-Kommunikationsbox (1, 13, 14) und zur Verschlüsselung/Entschlüsselung der Kurzstrecken-Kommunikationen umfasst und einen zweiten Prozessor (20) zur Verschlüsselung/Entschlüsselung der Langstrecken-Kommunikationen.

7. Gesicherte Schnittstellen-Kommunikationsbox (1, 13, 14) nach einem der Ansprüche 1 bis 6, **gekennzeichnet dadurch, dass** sie außerdem ein Speichermodul (21) oder ein entfernbares Speichermodul umfasst, das die Schlüssel zur Verschlüsselung/Entschlüsselung (26, 30) der Kurzstrecken-Kommunikationen und die Schlüssel zur Verschlüsselung/Entschlüsselung (23, 32) der Langstrecken-Kommunikationen speichert.

8. Gesicherte Schnittstellen-Kommunikationsbox nach Anspruch 7, **gekennzeichnet dadurch, dass** das Speichermodul außerdem eine Authentifizierungs-Bescheinigung (24, 27) des Inhabers der gesicherten Schnittstellen-Kommunikationsbox (1, 13, 14) speichert.

9. Gesicherte Schnittstellen-Kommunikationsbox (1, 13, 14) nach einem der Ansprüche 1 bis 8, **gekennzeichnet dadurch, dass** jedes Langstrecken-Kommunikationsmodul (6) eine entsprechende Antenne umfasst, wobei eine Wärmeleitpaste gemäß einer halbrohrförmigen Schicht auf der Innenfläche jeder Antenne angeordnet ist, wobei die Wärmeleitpaste an jedem Ende der Antenne in thermischem Kontakt mit einem Wärmeableitungsstück ist, bestehend aus abwechselnd Wärmeleitpaste und Metall, wobei das Wärmeableitungsstück thermisch mit einer Platte zur Wärmeableitung verbunden ist, die in der Box angeordnet ist.

10. Gesicherte Schnittstellen-Kommunikationsbox (1, 13, 14) nach einem der Ansprüche 1 bis 9, **gekennzeichnet dadurch, dass** sie aus einer metallischen Schale mit stoßfester und gleitsicherer Beschichtung besteht.

11. Gesicherte Schnittstellen-Kommunikationsbox (1, 13, 14) nach einem der Ansprüche 1 bis 10, **gekennzeichnet dadurch, dass** sie außerdem einen oder mehrere E/A-Anschlüsse umfasst, die von der Verwaltungsschnittstelle (2) gesteuert werden.

12. Gesicherte Schnittstellen-Kommunikationsbox (1, 13, 14) nach einem der Ansprüche 1 bis 11, **gekennzeichnet dadurch, dass** sie außerdem ein Erweiterungsmodul (9) umfasst, mit einem Stecker, der mit der Verwaltungsschnittstelle (2) über einen Kommunikationsbus verbunden ist, zum Austausch von Steuersignalen und/oder Daten mit der Verwaltungsschnittstelle (2).

13. Gesicherte Schnittstellen-Kommunikationsbox (1, 13, 14) nach einem der Ansprüche 1 bis 12, **gekennzeichnet dadurch, dass** sie eine Entwicklungsbox umfasst, die auf andere Module der gesicherten Schnittstellen-Kommunikationsbox zugreifen kann.

14. Gesicherte Kommunikationseinheit (10) mit zwei tragbaren Vorrichtungen (11, 12) und zwei gesicherten Schnittstellen-Kommunikationsboxen (1, 13, 14) nach einem beliebigen der Ansprüche 1 bis 12, wobei jede der beiden tragbaren Vorrichtungen einer der beiden gesicherten Schnittstellen-Kommunikationsboxen (1, 13, 14) zugeordnet ist und auf gesicherte Art mit dieser kommuniziert, durch verschlüsselte Kommunikation mittels der Kurzstrecken-Kommunikationsmodule (4) und Verschlüsselung/Entschlüsselungsmodule (5) für Kurzstrecken-Kommunikation, die beiden gesicherten Schnittstellen-Kommunikationsboxen (1, 13, 14) sind geeignet, durch verschlüsselte Langstrecken-Kommunikation mittels der Langstrecken-Kommunikationsmodule (6) zu kommunizieren, sowie mittels der Langstrecken-Kommunikations-Verschlüsselung/Entschlüsselungsmodule (7), wobei die tragbaren Vorrichtungen (11, 12) auf gesicherte Art kommunizieren, durch Austausch von Daten zwischen der tragbaren Vorrichtung (11, 12) als Absender und ihrer gesicherten Schnittstellen-Kommunikationsbox (1, 13, 14), die durch verschlüsselte Kurzstrecken-Kommunikation zugeordnet wird, Austausch von Daten durch verschlüsselte Langstrecken-Kommunikation zwischen den beiden gesicherten Schnittstellen-Kommunikationsboxen (1, 13, 14), und Austausch von Daten zwischen der gesicherten Schnittstellen-Kommunikationsbox (1, 13, 14), die der tragbaren Vorrichtung (11, 12) als Empfänger zugeordnet ist, und der tragbaren Vorrichtung (11, 12) als Empfänger durch verschlüsselte Kurzstrecken-Kommunikation, die Daten werden in jeder gesicherten Schnittstellen-Kommunikationsbox (1, 13, 14) verschlüsselt/entschlüsselt, so dass die Daten auf verschiedene Art zwischen den tragbaren Vorrichtungen (11, 12) und ihrer zugeordneten gesicherten Schnittstellen-Kommunikationsbox (1, 13, 14) verschlüsselt werden, wie auch zwischen den beiden gesicherten Schnittstellen-Kommunikationsboxen (1, 13, 14).

15. Gesichertes Kommunikationsverfahren in einer gesicherten Kommunikationseinheit (10) nach Anspruch 14, bei der eine der tragbaren Vorrichtungen (11, 12), genannt tragbare Sender-Vorrichtung, einer der gesicherten Schnittstellen-Kommunikationsboxen (1, 13, 14) zugeordnet ist, genannt Sender-Box, und bei der mindestens eine andere der tragbaren Vorrichtungen (11, 12), genannt tragbare Empfänger-Vorrichtung, jeweils einer anderen der gesicherten Schnittstellen-Kommunikationsboxen (1, 13, 14), genannt Empfänger-Box, zugeordnet ist, wobei das Verfahren folgendes umfasst:
- die Erzeugung von Daten auf der tragbaren Sender-Vorrichtung (11, 12);
- die Verschlüsselung von Daten auf der tragbaren Sender-Vorrichtung (11, 12);
- das Senden der verschlüsselten Daten von der tragbaren Sender-Vorrichtung (11, 12) an die Sender-Box durch Kurzstrecken-Kommunikation;
- die Entschlüsselung der verschlüsselte Daten mittels eines Ableseschlüssels (30) und eines persönlichen Zertifikats (27), die sich in dem Speichermodul (21) der Sender-Box befinden;
- die Verschlüsselung der entschlüsselten Daten mittels eines Codierungsschlüssels (32) und eines persönlichen Zertifikats (27), die sich in dem Speichermodul (21) der Sender-Box befinden;
- das Senden der so verschlüsselten Daten an eine oder mehrere Empfänger-Boxen durch Langstrecken-Kommunikation;
und in jeder Empfänger-Box:
- die Entschlüsselung der verschlüsselte Daten mittels eines Ableseschlüssels (23) und eines persönlichen Zertifikats (24), die sich in dem Speichermodul (21) der Empfänger-Box befinden;
- die Verschlüsselung der entschlüsselten Daten mittels eines Codierungsschlüssels (26) und eines persönlichen Zertifikats (27), die sich in dem Speichermodul (21) der Empfänger-Box befinden;
- das Senden der so verschlüsselten Daten an die tragbare Empfänger-Vorrichtung (11, 12) durch Kurzstrecken-Kommunikation;
die Entschlüsselung der verschlüsselten Daten durch die tragbare Empfänger-Vorrichtung (11, 12); das Betriebssystem der tragbaren Vorrichtung (11, 12) ist auf der gesicherten Schnittstellen-Kommunikationsbox (1, 13, 14) virtualisiert, der sie zugeordnet ist, um mittels der Verwaltungsschnittstelle (2) der gesicherten Schnittstellen-Kommunikationsbox (1, 13, 14) die tragbare Vorrichtung (11, 12) zu steuern.

## Claims

1. A secure communication interface unit (1, 13, 14), comprising:
- a management interface (2);
- a power supply (3) controlled by the management interface (2);
- a short-range communication module (4) with a portable device (11, 12), controlled by the management interface (2) ;
- a module for encrypting/decrypting the short range communication (5) between the secure communication interface unit (1, 13, 14) and the portable device (11, 12), controlled by the management interface (2);
- a long-range communication module (6), controlled by the management interface (2);
- a module for encrypting/decrypting the long range communication (7), controlled by the management interface (2);
- a module for computing the position (8) of the secure communication interface unit (1, 13, 14), controlled by the management interface (2); and
the secure communication interface unit (1, 13, 14) being further **characterized in that** it is adapted in such a way as to allow that:
- the power supply (3) is disabled and/or made definitively ineffective through the action of the management interface (2) on the power supply (3) from the elements collected by the position computing module (8), or that
- at least one of the communication modules (4, 6) of the unit (1, 13, 14) is made ineffective from the elements collected by the position computing module (8).

2. The secure communication interface unit (1, 13, 14) according to claim 1, **characterized in that** the short-range communication module (4) is a Bluetooth® standard communication module, a Wifi standard communication module, a Wimax standard communication module, a cable or a combination thereof.

3. The secure communication interface unit (1, 13, 14) according to claim 1 or claim 2, **characterized in that** the long-range communication module (6) is a 2G standard communication module, a 3G standard communication module, a civil 4G standard communication module, an out-of-band 4G standard communication module, a WIFI standard communication module, a Wimax standard communication module, or a combination thereof.

4. The secure communication interface unit (1, 13, 14) according to one of claims 1 to 3, **characterized in that** the position computing module (8) is a civil GPS system, a Y-code GPS system, a GLONASS system, a GALILEO system, a GALILEO system coupled to a Y-code GPS system, or a combination of one or more thereof.

5. The secure communication interface unit (1, 13, 14) according to one of claims 1 to 4, **characterized in that** the management interface (2) comprises an embedded operating system (18).

6. The secure communication interface unit (1, 13, 14) according to one of claims 1 to 5, **characterized in that** the management interface (2) comprises a first processor (19) for driving the different elements of the secure communication interface unit (1, 13, 14) and for encrypting/decrypting short range communications and a second processor (20) for encrypting/decrypting long range communications.

7. The secure communication interface unit (1, 13, 14) according to one of claims 1 to 6, **characterized in that** it further comprises a memory module (21) or a removable memory module, storing the encryption/decryption keys (26, 30) of the short range communications and the encryption/decryption keys (23, 32) of the long range communications.

8. The secure communication interface unit according to claim 7, **characterized in that** the memory module further stores an authentication certificate (24, 27) of the holder of the secure communication interface unit (1, 13, 14).

9. The secure communication interface unit (1, 13, 14) according to one of claims 1 to 8, **characterized in that** each long-range communication module (6) comprises a corresponding antenna, a thermal paste being arranged in a semi-tubular shaped layer on the internal surface of each antenna, said thermal paste being in thermal contact at each end of the antenna with a heat dissipating part made up of thermal paste alternating with metal, said heat dissipating part being thermally connected to a heat dissipating plate provided in the unit.

10. The secure communication interface unit (1, 13, 14) according to one of claims 1 to 9, **characterized in that** it comprises a metal shell coated with a shock-proof and anti-slip coating.

11. The secure communication interface unit (1, 13, 14) according to one of claims 1 to 10, **characterized in that** it further comprises one or more input/output ports controlled by the management interface (2) .

12. The secure communication interface unit (1, 13, 14) according to one of claims 1 to 11, **characterized in that** it further comprises a plug-in module (9), comprising a connector connected to the management interface (2) by a communication bus for exchanging control signals and/or data with the management interface (2).

13. The secure communication interface unit (1, 13, 14) according to one of claims 1 to 12, **characterized in that** it comprises an evolution unit adapted to access the other modules of the secure communication interface unit.

14. A secure communication set (10), comprising two portable devices (11, 12) and two secure communication interface units (1, 13, 14) according to any one of claims 1 to 12, each of the two portable devices being paired with one of the two secure communication interface units (1, 13, 14) and communicating securely therewith through encrypted communication by means of the short-range communication (4) and short-range communication encrypting/decrypting (5) modules, the two secure communication interface units (1, 13, 14) being adapted to communicate through long-range encrypted communication by means of the long-range communication (6) and long-range communication encrypting/decrypting (7) modules, the portable devices (11, 12) communicating securely by exchanging data between the sending portable device (11, 12) and its paired secure communication interface unit (1, 13, 14) through short-range encrypted communication, exchanging data through long-range encrypted communication between the two secure communication interface units (1, 13, 14), and exchanging data between the secure communication interface unit (1, 13, 14) paired with the receiving portable device (11, 12) and the receiving portable device (11, 12) through short-range encrypted communication, the data being encrypted/decrypted in each secure communication interface unit (1, 13, 14) such that the data are encrypted differently between the portable devices (11, 12) and their paired secure communication interface unit (1, 13, 14), and between the two secure communication interface units (1, 13, 14).

15. A method for communicating securely within a secure communication set (10) according to claim 14, one of the portable devices (11, 12), referred to as sending portable device, of the set being paired with one of the secure communication interface units (1, 13, 14), referred to as sending unit, and at least one other of the portable devices (11, 12), referred to as receiving portable device, of the set being each paired with one other of the secure communication interface units (1, 13, 14), referred to as receiving unit, the method comprising:
- generating data on the sending portable device (11, 12) ;
- encrypting data on the sending portable device (11, 12) ;
- sending the encrypted data from the sending portable device (11, 12) to the sending unit through short range communication;
- decrypting the encrypted data by means of a reading key (30) and of a personal certificate (27) located in the memory module (21) of the sending unit;
- encrypting the decrypted data by means of an encoding key (32) and of a personal certificate (27) located in the memory module (21) of the sending unit;
- sending the data thus encrypted to one or more receiving units through long range communication;
and on each receiving unit:
- decrypting the encrypted data by means of a reading key (23) and of a personal certificate (24) located in the memory module (21) of the receiving unit;
- encrypting the decrypted data by means of an encoding key (26) and of a personal certificate (27) located in the memory module (21) of the receiving unit;
- sending the data thus encrypted to the receiving portable device (11, 12) through short range communication;
- decrypting the encrypted data by the receiving portable device (11, 12);
the operating system of the portable device (11, 12) being virtualized on the secure communication interface unit (1, 13, 14) with which it is paired, in order to control, through the management interface (2) of the secure communication interface unit (1, 13, 14), the portable device (11, 12).
